# EUROPÄISCHE PATENTSCHRIFT

(11) **EP 2 822 821 B1**
(45) Veröffentlichungstag und Bekanntmachung des Hinweises auf die Patenterteilung: **20.07.2016**
(21) Anmeldenummer: 13723005.8
(22) Anmeldetag: 07.03.2013
(51) Int. Cl.: B60T 1/087, F16D 57/04

(54) **HYDRODYNAMISCHER RETARDER UND VERFAHREN ZUM STEUERN DER LEISTUNGSÜBERTRAGUNG EINES SOLCHEN**
HYDRODYNAMIC RETARDER AND METHOD FOR CONTROLLING THE POWER TRANSMISSION OF SUCH A RETARDER
RALENTISSEUR HYDRODYNAMIQUE ET PROCÉDÉ DE COMMANDE DE LA TRANSMISSION DE PUISSANCE D'UN TEL RALENTISSEUR

(30) Priorität: 07.03.2012 DE 102012004332
(43) Veröffentlichungstag der Anmeldung: 14.01.2015
(73) Patentinhaber: Voith Patent GmbH, 89522 Heidenheim (DE)
(72) Erfinder: LAUKEMANN, Dieter, 74564 Crailsheim (DE); ADAMS, Werner, 74564 Crailsheim (DE); KIBLER, Jürgen, 73431 Aalen (DE)
(74) Vertreter: Dr. Weitzel & Partner
(86) Internationale Anmeldenummer: PCT/EP2013/054635
(87) Internationale Veröffentlichungsnummer: WO 2013/132022

(56) Entgegenhaltungen:
- WO-A1-2005/025957
- DE-A1- 10 150 681

## Beschreibung

Die vorliegende Erfindung betrifft ein Verfahren zum Steuern der Leistungsübertragung eines hydrodynamischen Retarders, nach dem Oberbegriff vom Anspruch 1, sowie einen hydrodynamischen Retarder, beispielsweise für Busse, Lastkraftwagen oder Schienenfahrzeugen, nach dem Oberbegriff vom Anspruch 10. Ein solcher Retarder und ein solches Verfahren sind aus WO 2005/025957 A bekannt.

Hydrodynamische Retarder weisen einen Arbeitsraum auf, der mit einem Arbeitsmedium befüllbar ist, um Drehmoment von einem angetriebenen Primärschaufelrad (Rotor) auf ein stationäres Sekundärschaufelrad, deshalb auch Stator genannt, hydrodynamisch zu übertragen. Anstelle eines stationären Sekundärschaufelrades kann auch ein entgegen dem Drehsinn des Primärschaufelrades umlaufendes Sekundärschaufelrad vorgesehen sein, um einen Gegenlaufretarder auszubilden. Durch Antreiben des Rotors mittels einer abzubremsenden Rotorwelle, beispielsweise einer Getriebeausgangswelle oder einer indirekt mit den Antriebsrädern des Kraftfahrzeugs drehfest verbundenen Welle (Gelenkwelle), wird das Arbeitsmedium im Rotor radial nach außen beschleunigt und tritt in den Stator ein, in welchem es radial nach innen strömend verzögert wird. Durch die derart ausgebildete Kreislaufströmung wird Drehmoment - hier als Bremsmoment des Retarders bezeichnet - vom Rotor auf den Stator übertragen. Dabei wird das Primärschaufelrad verzögert und insbesondere die mit dem Primärschaufelrad drehfest ausgeführte Rotorwelle, verzögert.

Die Größe des übertragenen Bremsmomentes im Bremsbetrieb hängt dabei vom sogenannten Füllungsgrad des hydrodynamischen Retarders ab. Im Nicht-Bremsbetrieb wird der Arbeitsraum des Retarders hingegen vom Arbeitsmedium entleert.

Die Einstellung eines bestimmten Füllungsgrades des Arbeitsraumes eines hydrodynamischen Retarders und damit die Steuerung des übertragenen Bremsmomentes kann entweder durch Aufbringen eines Steuerdruckes auf das dem Arbeitsraum zugeführte oder zuzuführende Arbeitsmedium oder durch eine Steuerung des Strömungsquerschnittes in einem Einlass oder Auslass des hydrodynamischen Retarders mittels eines Regelventils, insbesondere Proportionalventils, ohne Aufbringen eines Steuerdruckes auf das dem Arbeitsraum zugeführte Arbeitsmedium erfolgen.

Zum Aufbringen eines Steuerdruckes auf das Arbeitsmedium des hydrodynamischen Retarders ist es zum Beispiel bekannt, einen Vorratsraum für das Arbeitsmedium, insbesondere ÖI, mit einer druckluftbeaufschlagten Membran vorzusehen. Die Membran trennt das Arbeitsmedium von einem Luftraum, der mittels eines Druckluftsystems, insbesondere Fahrzeugdruckluftsystems, beaufschlagt wird. Die Membran oder ein gleichwirkender Kolben oder dergleichen ist jedoch nicht zwingend notwendig. Der Steuermediumdruck, insbesondere Luftdruck, kann auch direkt auf den Arbeitsmediumvorrat ausgeübt werden. Mittels eines pneumatischen Ventils kann der Luftdruck als Steuerdruck variiert werden und damit mehr oder weniger Arbeitsmedium aus dem Vorratsraum in den hydrodynamischen Kreislauf des Arbeitsmediums im Arbeitsraum gedrückt beziehungsweise verdrängt werden.

Die vorliegende Erfindung betrifft beide oben genannte Varianten zur Einstellung eines bestimmten Füllungsgrades des Arbeitsraums im Bremsbetrieb.

Im Allgemeinen entstehen im Nicht-Bremsbetrieb von hydrodynamischen Retardern infolge der Drehung des Rotors Verluste (sogenannte Ventilations- oder Leerlaufverluste), weil trotz entleertem Arbeitsraum Drehmoment zwischen den Schaufelrädern übertragen wird. Der Retarder erzeugt somit ein unerwünschtes Bremsmoment.

Zur Vermeidung dieser Leerlaufverluste ist es bekannt, die beiden Schaufelräder des Retarders im Nicht-Bremsbetrieb axial voneinander wegzufahren, um eine solche Drehmomentübertragung zu unterbinden. Andere Maßnahmen sehen vor, Störelemente wie Blenden oder einen Sperrmediumstrahl in den Arbeitsraum einzubringen oder den Arbeitsraum leer zu saugen, um darin einen Unterdruck zu erzeugen. Ferner sind Ansätze bekannt geworden, die gezielt eine bestimmte Restmenge an Arbeitsmedium zum Erreichen eines optimalen Verlustleistungswertes, das heißt eines minimalen Ventilationsverlustes, im Arbeitsraum belassen. DE 101 50 681 A1 schlägt dazu vor, im Nicht-Bremsbetrieb dem Arbeitsraum Arbeitsmedium aus einem zusätzlich zum Arbeitsmediumbehälter vorgesehenen, gegenüber dem Arbeitsraum erhöht angeordneten Behälter zuzuführen.

Die im Nicht-Bremsbetrieb im Arbeitsraum befindliche Restmenge von Arbeitsmedium erwärmt sich und muss daher in einem externen Kreislauf abgekühlt werden. Dieser externe Kreislauf ist in der Regel durch einen eigenen Wärmetauscher geführt, der zusätzlich zu dem verhältnismäßig größeren Wärmetauscher im externen Kreislauf für den Bremsbetrieb vorgesehen ist. Würde der vergleichsweise kleine Arbeitsmediumvolumenstrom des Nicht-Bremsbetrieb nämlich durch den großen Wärmetauscher des Bremsbetriebs gefördert werden, so könnte sich in dem Wärmetauscher die vom Arbeitsmedium aus dem Arbeitsraum mitgerissene Luft ansammeln, was einerseits ungünstig für den Wärmetauscher ist und andererseits beim Einschalten des Retarders, das heißt beim Übergang vom Nicht-Bremsbetrieb zum Bremsbetrieb, zu einem Leerblasen des Arbeitsraums, nachdem der Füllvorgang bereits begonnen hat, führen kann.

Es versteht sich, dass das Vorsehen eines eigenen "keinen" Arbeitsmediumkreislaufes mit einem eigenen Wärmetauscher aufwändig und kostenintensiv ist.

In der Praxis hat sich ferner herausgestellt, dass die Verlustleistung des bekannten hydrodynamischen Retarders, in dessen Arbeitsraum im Nicht-Bremsbetrieb Arbeitsmedium aus dem erhöht angeordneten Behälter einströmt, mit zunehmender Drehzahl deutlich zunimmt.

Die Offenlegungsschrift DE 20 2005 003 329 U1 beschreibt eine Retarder-Rotationspumpen-Baugruppe, bei welcher das Laufrad der Wasserpumpe des Fahrzeugkühlkreislaufes axial neben dem Rotor des hydrodynamischen Retarders auf einer gemeinsamen Welle mit diesem positioniert ist, um so über Dichtungen, mittels welchen der Rotor gegenüber einem Gehäuse des Retarders abgedichtet ist, ausströmendes Arbeitsmedium zu erfassen und in den Fahrzeugskühlkreislauf zurückzuführen. Wenn nur mit der Kühlmittelpumpe Kühlmittel im Kühlkreislauf umgewälzt werden soll und somit der Retarder sich im Leerlauf befindet, können die Dichtungen mit Wasser aus der Wasserpumpe gekühlt werden, welches dann zum einen in den Arbeitsraum des Retarders und zum anderen im dampfförmigen Zustand in die Umgebung strömt.

Der Erfindung liegt daher die Aufgabe zugrunde, einen hydrodynamischen Retarder sowie ein Verfahren zum Steuern der Leistungsübertragung eines solchen anzugeben, welche gegenüber dem Stand der Technik verbessert sind. Insbesondere sollen die Verluste im Nicht-Bremsbetrieb des hydrodynamischen Retarders auch bei hohen Drehzahlen minimiert werden. Ferner soll der konstruktive, Herstellungs- sowie Regelaufwand eines solchen hydrodynamischen Retarders reduziert werden.

Die erfindungsgemäße Aufgabe wird durch ein Verfahren zum Steuern der Leistungsübertragung eines hydrodynamischen Retarders sowie durch einen solchen hydrodynamischen Retarder gemäß den unabhängigen Ansprüchen gelöst. In den abhängigen Ansprüchen sind besonders vorteilhafte und besonders zweckmäßige Ausgestaltungen der Erfindung angegeben.

Ein erfindungsgemäßes Verfahren zum Steuern der Leistungsübertragung eines hydrodynamischen Retarders, umfassend einen umlaufenden beschaufelten Rotor und einen beschaufelten Stator oder einen entgegen dem Drehsinn des Rotors umlaufenden Gegenlaufrotor, die miteinander einen über einen Einlass mit Arbeitsmedium befüllbaren und über einen Auslass davon entleerbaren Arbeitsraum ausbilden, wobei der Arbeitsraum in einem Bremsbetrieb mit Arbeitsmedium befüllt wird und ein Bremsmoment mit dem hydrodynamischen Retarder erzeugt wird und in einem Nicht-Bremsbetrieb der Arbeitsraum bis auf eine vorbestimmte Restmenge entleert wird und mit dem hydrodynamischen Retarder im Wesentlichen kein Bremsmoment erzeugt wird, umfasst den folgenden Schritt: Im Nicht-Bremsbetrieb wird mit einer Leerlaufpumpe Arbeitsmedium in den Arbeitsraum des hydrodynamischen Retarders zur Einstellung der vorbestimmten Restmenge hineingefördert.

Im Gegensatz zu einer Absaugung des Arbeitsmediums aus dem Arbeitsraum mit einer Pumpe oder zur Erzeugung eines Unterdrucks im Arbeitsraum mit einer Pumpe wird demnach gezielt Arbeitsmedium mit einer Leerlaufpumpe in den Arbeitsraum hinein gepumpt, das heißt, die Leerlaufpumpe ist in Strömungsrichtung des Arbeitsmediums vor einem Einlass, insbesondere unmittelbar vor einem Einlass in den Arbeitsraum positioniert. Die Erfinder haben nämlich erkannt, dass die übermäßige Zunahme der Leerlaufverluste mit steigender Drehzahl des Retarders beziehungsweise des Rotors desselben dadurch begründet sind, dass der Retarder aufgrund seiner Pumpwirkung zunehmend Arbeitsmedium der Restarbeitsmediummenge aus dem Arbeitsraum herausfördert, wohingegen das Einströmen von Arbeitsmedium in den Arbeitsraum nur aufgrund von Schwerkraft erfolgt, da der Retarder nicht die erwartete Saugwirkung aufweist. Die im Nicht-Bremsbetrieb in den Arbeitsraum einströmende Arbeitsmediummenge (Arbeitsmediumvolumenstrom oder Arbeitsmediummassenstrom) ist demnach konstant, was bei mit zunehmender Drehzahl vergrößerter abgeführter Arbeitsmediummenge (Massenstrom oder Volumenstrom) zu einer Reduzierung der im Arbeitsraum verbleibenden Restarbeitsmediummenge führt. Die optimale Restarbeitsmediummenge zur Einstellung eines minimalen Ventilationsverlustes ist hingegen unabhängig von der Drehzahl des Retarders und insbesondere konstant. Dadurch, dass nun erfindungsgemäß Arbeitsmedium im Nicht-Bremsbetrieb in den Arbeitsraum des hydrodynamischen Retarders hineingepumpt wird, kann die optimale Restarbeitsmediummenge, insbesondere eine konstante Restarbeitsmediummenge, sichergestellt werden.

Vorteilhaft wird eine Leerlaufpumpe verwendet, deren Außendurchmesser zumindest eines Laufrades derselben kleiner ist als der Außendurchmesser des Arbeitsraums, insbesondere kleiner ist als der Durchmesser, auf dem die Mündung des Einlasses im Arbeitsraum positioniert ist, oder sogar kleiner ist als der Innendurchmesser des Arbeitsraums.

Gemäß einer bevorzugten Ausführungsform des Verfahrens ist der dem Arbeitsraum während des Nicht-Bremsbetriebs zugeführte Arbeitsmediumvolumenstrom oder -massenstrom proportional zur Rotor- und/oder Gegenlaufrotordrehzahl (letzteres bei Ausführung als Gegenlaufretarder), sodass bei einem vergleichsweise niedrigen Drehzahlwert der mit der Leerlaufpumpe in den Arbeitsraum geförderte Arbeitsmediumvolumenstrom oder -massenstrom geringer ausfällt und bei einem vergleichsweise höheren Drehzahlwert entsprechend höher ist.

Günstig ist es, wenn die Leerlaufpumpe direkt oder indirekt durch den Rotor oder den Gegenlaufrotor des Retarders angetrieben wird. Beispielsweise kann hierfür das Laufrad einer Leerlaufpumpe vom Rotor oder der Rotorwelle beziehungsweise vom Gegenlaufrotor oder der Gegenlaufrotorwelle getragen werden.

Eine Ausführungsform sieht vor, dass im Bremsbetrieb die im Arbeitsraum enthaltene Arbeitsmediummenge durch mehr oder minder starkes Beaufschlagen eines Arbeitsmediumvorrats, der außerhalb des Arbeitsraums in einem Arbeitsmediumvorratsbehälter vorgesehen ist, mit einem Steuerdruck variiert wird, wobei in Abhängigkeit des Steuerdrucks mehr oder weniger Arbeitsmedium aus dem Arbeitsmediumvorrat in den Arbeitsraum verdrängt wird, und dass im Nicht-Bremsbetrieb der Arbeitsmediumvorratsbehälter mittels eines Entlüftungsventils vollständig entlüftet wird. Hierdurch kann die Fördermenge der Leerlaufpumpe, die insbesondere das Arbeitsmedium aus dem Arbeitsmediumvorrat fördert, sehr präzise eingestellt werden.

Eine besonders kostengünstig herstellbare Ausführungsform sieht vor, dass die Leerlaufpumpe ein Laufrad in Form einer Scheibe mit einem radial inneren Eintrittsbereich für Arbeitsmedium und einem radial äußeren Austrittsbereich für Arbeitsmedium aufweist, wobei das Arbeitsmedium durch Antreiben des Laufrads und durch Wirkung der Zentrifugalkraft vom Eintrittsbereich zum Austrittsbereich und aus diesem heraus in den Arbeitsraum gefördert wird. Das Arbeitsmedium kann beispielsweise aus dem Arbeitsmediumvorrat zum Eintrittsbereich geleitet werden, insbesondere über eine zusätzlich zu dem externen Arbeitsmediumkreislauf, in welchem das Arbeitsmedium im Bremsbetrieb zirkuliert wird, vorgesehenen arbeitsmediumleitende Verbindung.

Ein erfindungsgemäß ausgeführter hydrodynamischer Retarder umfasst einen umlaufenden beschaufelten Rotor und einen beschaufelten Stator oder einen entgegen dem Drehsinn des Rotors umlaufenden Gegenlaufrotor, die miteinander einen im Bremsbetrieb über einen Einlass mit Arbeitsmedium befüllbaren und über einen Auslass davon entleerbaren Arbeitsraum ausbilden, wobei der Arbeitsraum in einem Bremsbetrieb mit Arbeitsmedium befüllbar ist, um ein Bremsmoment mit dem hydrodynamischen Retarder einzustellen und in einem Nicht-Bremsbetrieb bis auf eine bestimmte Restmenge von Arbeitsmedium entleert ist und im Wesentlichen kein Bremsmoment liefert. Dabei ist eine Leerlaufpumpe vorgesehen, die im Nicht-Bremsbetrieb Arbeitsmedium in den Arbeitsraum hineinfördert.

Der dem Arbeitsraum mittels der Leerlaufpumpe zugeführte Fördervolumenstrom oder Massenstrom an Arbeitsmedium kann derart gewählt sein, dass dieser gleich dem aus dem Arbeitsraum (infolge der Pumpwirkung des Retarders) abgeführten Arbeitsmediumvolumenstrom oder -massenstrom ist. In anderen Worten bedeutet dies, dass die gesamte, im Arbeitsraum während des Nicht-Bremsbetriebs vorhandene Restmenge an Arbeitsmedium durch ständige Zufuhr mittels der Leerlaufpumpe und ständige Abfuhr infolge der Pumpwirkung des Retarders (nahezu) konstant bleibt. Diese dem Arbeitsraum ständig während des Nicht-Bremsbetriebs zugeführte Menge an Arbeitsmedium beziehungsweise die im Arbeitsraum verbleibende Restmenge entspricht dabei einem Bruchteil des Arbeitsraumvolumens. Diese Menge ist auch deutlich geringer als jene Menge, die nötig ist, um mit dem Retarder gerade noch das minimal mögliche, von diesem im Bremsbetrieb einstellbare Bremsmoment einzustellen. Damit ist die im Arbeitsraum verbleibende Restmenge so gewählt, dass im Nicht-Bremsbetrieb ein Ansprechen des Retarders (und damit ein Bremsen) nicht erfolgt und zugleich die Leerlaufverluste möglichst gering gehalten werden.

Zudem zirkuliert die gesamte im Arbeitsraum befindliche Restmenge an Arbeitsmedium zur Wärmeabfuhr. Bevorzugt ist dazu ein externer Kühlkreislauf vorgesehen, in den das über den Auslass abgeführte Arbeitsmedium in einem Wärmetauscher gekühlt wird, sodass der Arbeitsraum in diesem Fall als Bestandteil des externen Kühlkreislaufs ständig durchströmt wird. Durch diesen stetigen Austausch der insbesondere gesamten Restmenge an Arbeitsmedium aus dem Arbeitsraum wird eine ständige Zirkulation zu und aus dem Arbeitsraum erreicht. Hierdurch kann die im Nicht-Bremsbetrieb aufgrund von Flüssigkeitsreibung entstehende Wärme aus der Restmenge an Arbeitsmedium aus dem Arbeitsraum abgeführt werden. Schädigungen des Retarders können so effektiv vermieden werden. Dieser Kühlkreislauf im Nicht-Bremsbetrieb kann denselben Wärmetauscher nutzen wie der externe Arbeitsmediumkreislauf im Bremsbetrieb. Es ist also nicht notwendig, diesen Kühlkreislauf des Nicht-Bremsbetriebs isoliert vom externen Arbeitsmediumkreislauf im Bremsbetrieb auszuführen. Beispielsweise münden die Leitungen des "kleine" Kühlkreislaufes für den Nicht-Bremsbetrieb in dem Arbeitsmediumvorratsbehälter und/oder in Leitungen des externen Kühlkreislaufs für den Bremsbetrieb. Günstig ist jedoch, wenn für den Kühlkreislauf im Nicht-Bremsbetrieb eigene Anschlüsse am hydrodynamischen Retarder beziehungsweise am Arbeitsraum des hydrodynamischen Retarders, getrennt von den Anschlüssen des externen Kühlkreislaufs für den Bremsbetrieb, vorgesehen sind.

Es können Maßnahmen getroffen werden, um eine unerwünschte oder übermäßige Vermischung des Arbeitsmediums mit Luft im Arbeitsraum des hydrodynamischen Retarders im Nicht-Bremsbetrieb zu vermeiden. Beispielsweise verläuft hierfür der Auslass für das Arbeitsmedium, das im Nicht-Bremsbetrieb zirkuliert, in Radialrichtung des Arbeitsraums. Ferner kann hier ein sogenanntes Schöpfrohr vorgesehen sein, das insbesondere in ein Gehäuse des hydrodynamischen Retarders in Richtung des Arbeitsraumes hineinragt oder in den Arbeitsraum hineinragt und sich in Radialrichtung erstreckt.

Bevorzug ist zusätzlich zu dem Auslass, über welchen der externe Kühlkreislauf am Arbeitsraum angeschlossen ist, eine Ableitung für Arbeitsmedium im Nicht-Bremsbetrieb vorgesehen, welche das in Radialrichtung zu dem Arbeitsraum verlaufende und/oder in diesen hineinreichende Schöpfrohr aufweist. Das Schöpfrohr dient dabei als Staustelle zum Abgreifen von überschüssigem Arbeitsmedium aus dem Arbeitsraum.

Das Schöpfrohr kann dabei in einen Spalt hineinragen, welcher von dem Rotor, Gegenlaufrotor, Stator und/oder ein wenigstens eines dieser Bauteile umgebendes Gehäuse zusammen begrenzen. Bevorzugt jedoch reicht das Schöpfrohr im Bereich des Spalts zwischen einem umlaufenden Laufrad und dem Gehäuse hinein.

Mit Vorteil ist das Schöpfrohr unmittelbar mit dem Eintrittsbereich verbunden oder mittelbar über wenigstens eine Verbindungsleitung, die in den Eintrittsbereich mündet, strömungsleitend mit dem Eintrittsbereich verbunden. Somit kann die Leerlaufpumpe unterstützend auf das Schöpfrohr einwirken, um Arbeitsmedium aus dem Arbeitsraum über das Schöpfrohr abzuführen.

In der wenigstens einen Verbindungsleitung, welche das Schöpfrohr mittelbar mit dem Eintrittsbereich verbindet, kann ein Wärmetauscher zum Kühlen des über das Schöpfrohr abgegriffenen Arbeitsmediums angeordnet sein. Bevorzugt weist der Wärmetauscher jedoch einen ersten Kühlkreis zum Kühlen des über das Schöpfrohr abgegriffenen Arbeitsmediums und einen zweiten Kühlkreis zum Kühlen des über den Auslass abgeführten Arbeitsmediums auf. Dabei können beide Kühlkreise hinsichtlich des Arbeitsmediums fluidisch voneinander getrennt sein. Durch den separaten Kühlkreislauf wird ein Lufteintrag, der bei Abgreifen des Arbeitsmediums über das Schöpfrohr in den zweiten Kühlkreis, in dem das über den Auslass abgeführte Arbeitsmedium strömt, verhindert. Hierdurch wird vermieden, dass der Wärmetauscher sich mit Luft füllt, wodurch dessen Kühlleistung sinkt.

Dem Arbeitsraum wird von der Leerlaufpumpe bevorzugt reines Arbeitsmedium und nicht beispielsweise ein Luft-Arbeitsmedium-Gemisch zugeführt. Die Pumpe dient damit dem reinen Fördern von Arbeitsmedium aus dem Arbeitsmediumvorratsbehälter zum Arbeitsraum. Insbesondere wird mittels der Leerlaufpumpe das Arbeitsmedium aus dem Arbeitsmediumvorratsbehälter nur insofern beschleunigt, als dies zur Förderung des Arbeitsmediums zum Arbeitsraum nötig ist. Dies bedeutet in anderen Worten, dass der statische Druckanteil des Arbeitsmediums in der Verbindungsleitung zwischen dem Arbeitsmediumvorratsbehälter und dem Arbeitsraum zur Einstellung eines Kühlstromes mittels der Leerlaufpumpe gegenüber dem kinetischen Druckanteil überwiegt; es erfolgt keine nennenswerte Drucksteigerung des Arbeitsmediums entlang dieser Verbindungsleitung, sodass die Eintrittsgeschwindigkeit mit der das Arbeitsmedium aus dem Arbeitsmediumvorratsbehälter in die Leerlaufpumpe gelangt im Wesentlichen der Austrittsgeschwindigkeit, abgesehen von Reibungsverlusten, in Strömungsrichtung hinter der Leerlaufpumpe im Arbeitsraum entspricht. Das Arbeitsmedium gelangt daher nahezu drucklos in den Arbeitsraum. Dies bedeutet auch, dass in der Verbindungsleitung zwischen Arbeitsmediumvorratsbehälter und Arbeitsraum, in der die Leerlaufpumpe angeordnet ist, keinerlei Düsen zur Beschleunigung des Arbeitsmediums und zum übermäßigen Druckaufbau vorgesehen sind. Andere Ausführungsformen sind jedoch möglich.

Günstig ist, wenn die Verbindungsleitung, über welche die Leerlaufpumpe Arbeitsmedium aus dem Arbeitsmediumvorratsbehälter in den Arbeitsraum fördert, unterhalb des Arbeitsmediumspiegels, insbesondere Ölspiegels, im Arbeitsmediumvorratsbehälter mündet.

Die Leerlaufpumpe kann dabei derart ausgebildet sein, dass diese ausschließlich im Nicht-Bremsbetrieb den erfindungsgemäßen Zustrom an Arbeitsmedium zum Arbeitsraum erlaubt beziehungsweise bereitgestellt. In anderen Worten dient diese ausschließlich zur Aufrechterhaltung eines Arbeitsmdiumstromes durch den Arbeitsraum im Nicht-Bremsbetrieb des Retarders. Die Aufgabe der Einstellung eines Füllungsgrades zur Ausübung eines hydrodynamischen Bremsmoments während des Bremsbetriebs wird durch ein separates Druckbeaufschlagungssystem erzielt.

Die Leerlaufpumpe kann bevorzugt die einzige im externen Kühlkreislauf vorgesehene Pumpe sein.

Die Erfindung soll nun nachfolgend anhand der beigefügten Figur exemplarisch erläutert werden.

Es zeigen:
- Figur 1: eine schematische Darstellung eines in einer Bremsanlage eines Fahrzeugs angeordneten hydrodynamischen Retarders gemäß einer ersten Ausführungsform;
- Figur 2: eine schematische Darstellung eines in einer Bremsanlage eines Fahrzeugs angeordneten hydrodynamischen Retarders gemäß einer weiteren Ausführungsform;
- Figur 3: eine schematische Darstellung eines in einer Bremsanlage eines Fahrzeugs angeordneten hydrodynamischen Retarders gemäß einer dritten Ausführungsform.

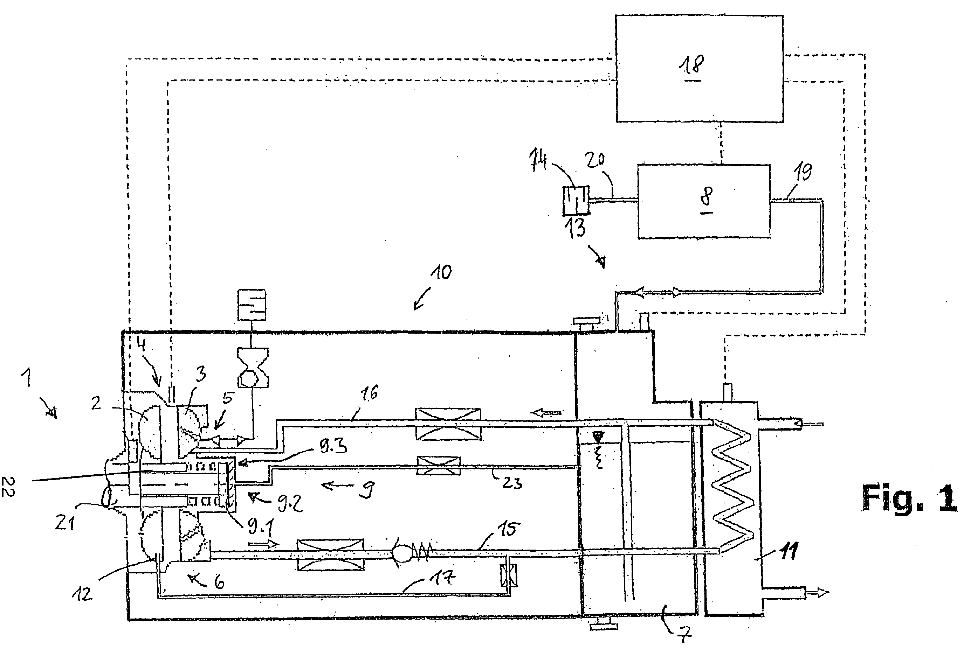

Figur 1 zeigt einen hydrodynamischen Retarder 1 als Teil einer Bremsanlage eines Kraftfahrzeugs mit einem arbeitsmediumführenden externen Kühlkreislauf, welcher zum Abführen der im Arbeitsmedium anfallenden Wärme im Bremsbetrieb des hydrodynamischen Retarders 1 dient. Im vorliegenden Fall ist das Arbeitsmedium Öl. Der hydrodynamische Retarder 1 könnte aber auch Teil eines Kühlkreislaufs des Kraftfahrzeugs sein, wobei dann das Arbeitsmedium Wasser oder ein Wassergemisch sein könnte.

Im externen Kühlkreislauf sind, wie in Figur 1 dargestellt, in Strömungsrichtung des Arbeitsmediums folgende Komponenten angeordnet: der hydrodynamische Retarder 1, umfassend einen Rotor 2 und einen Stator 3, die miteinander einen torusförmigen Arbeitsraum 4 ausbilden, die Mündung einer ersten Verbindungsleitung 15 aus dem hydrodynamischen Retarder 1 zu einem Wärmetauscher 11, bei dem Arbeitsmedium Öl, auch als Ölkühler bezeichnet, eine hinter dieser Mündung angeordnete feststehende Drossel konstanten Querschnitts, sowie ein der Drossel nachgeschaltetes Rückschlagventil, der Wärmetauscher 11, eine Mündung einer zweiten Verbindungsleitung 16 vom Wärmetauscher 11 zum Arbeitsraum 4 des hydrodynamischen Retarders 1 sowie eine weitere Drossel. Im vorliegenden Fall mündet die zweite Verbindungsleitung 16 in einem Einlass 5, über den der Arbeitsraum 4 mit Arbeitsmedium aus der zweiten Verbindungsleitung 16 des externen Kühlkreislaufs befüllbar ist. Über einen Auslass 6, in den die erste Verbindungsleitung 15 mündet, wird das Arbeitsmedium aus dem Arbeitsraum 4 wieder zurück in den externen Kühlkreislauf geleitet.

Hier ist der Wärmetauscher 11 an einem Arbeitsmediumvorratsbehälter 7 zur Aufnahme von im Arbeitsraum 4 momentan nicht benötigten Arbeitsmediums angeordnet. Arbeitsmediumvorratsbehälter 7 und Wärmetauscher 11 könnten zu einer einzigen Baueinheit zusammengefasst sein, was jedoch nicht zwingend der Fall sein muss. Auch der hydrodynamische Retarder 1, der dargestellte Kühlkreislauf, der Arbeitsmediumbehälter 7 und/oder der Wärmetauscher 11 könnten zu einer solchen einzigen Baueinheit zusammengefasst sein. Der Wärmetauscher 11 ist zur Kühlung des Arbeitsmediums des hydrodynamischen Retarders 1 vorliegend an einen Kühlkreislauf des Fahrzeugs (nicht gezeigt) angeschlossen, um die im externen Kühlkreislauf anfallende Wärme des Arbeitsmediums an diesen abzugeben.

Zur Einstellung eines bestimmten Füllungsgrades des Arbeitsraums 4 im Bremsbetrieb des hydrodynamischen Retarders 1 ist hier der Arbeitsmediumvorratsbehälter 7 zur Beaufschlagung des darin enthaltenen Arbeitsmediums über eine strömungsleitende Verbindung, hier mit Arbeitsleitung 19 bezeichnet, mit einem Druckbeaufschlagungssystem 8 verbunden. Mittels einer insbesondere dem hydrodynamischen Retarder 1 zugeordneten Steuervorrichtung 18 wird in Abhängigkeit einer mit dem hydrodynamischen Retarder 1 einzustellenden Bremsleistung beziehungsweise eines einzustellenden Bremsmoments, beispielsweise einer mittels eines Wählhebels (nicht gezeigt) ausgewählten Bremsstufe, ein entsprechender Überlagerungsdruck, im Weiteren als Steuerdruck bezeichnet, berechnet.

Der Steuerdruck wird mittels des Druckbeaufschlagungssystems 8 dadurch eingestellt, dass die Steuervorrichtung 18 ein Ventil in einer Druckluftleitung (nicht dargestellt) des Druckbeaufschlagungssystems 8, in welcher Druckluft aus dem Fahrzeugdruckluftsystem (ebenfalls nicht gezeigt) ansteht, mehr oder minder öffnet. Das Ventil stellt dann in Abhängigkeit seines Öffnungsquerschnitts den Druck (Luftdruck) in der Arbeitsleitung 19 zur Beaufschlagung des Arbeitsmediumvorratsbehälters 7 ein. Letzterer ist teilweise mit Luft, teilweise mit Arbeitsmedium befüllt. Die Arbeitsleitung 19 ist dazu im Bereich eines Druckmediumanschlusses 13 des Arbeitsmediumbehälters 7 hier mit dessen Luftseite oberhalb eines Flüssigkeitsspiegels des Arbeitsmediums zu dessen Beaufschlagung druckluftleitend verbunden.

Die Arbeitsleitung 19 beaufschlagt einerseits das im Arbeitsmediumvorratsbehälter 7 enthaltene Arbeitsmedium mit dem durch das Druckbeaufschlagungssystem 8 eingestellten Steuerdruck, um dieses in Abhängigkeit des Steuerdruckes mehr oder minder aus dem Arbeitsmediumvorratsbehälter 7 in den externen Kühlkreislauf und damit in den Arbeitsraum 4 des Retarders 1 zu verdrängen. Durch den Druck auf den Flüssigkeitsspiegel steigt Arbeitsmedium in einen Kanal, welcher unterhalb des Flüssigkeitsspiegels mündet und mit der zweiten Verbindungsleitung 16 (in Strömungsrichtung gesehen hinter dem Wärmetauscher 11) arbeitsmediumleitend verbunden ist, um so Arbeitsmedium aus dem Arbeitsmediumvorratsbehälter 7 über den Einlass 5 dem Arbeitsraum 4 zuzuführen. Der Einlass 5 kann in Form von im Stator 3 und/oder Rotor 2 eingebrachten Schlitzen ausgebildet sein. Derartige Schlitze können auch zusätzlich zu dem Einlass 5 zum Zuführen von Arbeitsmedium in den Arbeitsraum 4 vorgesehen sein und beispielsweise mit der zweiten Verbindungsleitung 16 strömungsleitend verbunden sein. Selbiges gilt auch bei Ausführung als Gegenlaufretarder für den Gegenlaufrotor (nicht dargestellt).

Wenn hingegen der Steuerdruck im Arbeitsmediumvorratsbehälter 7, welcher das Arbeitsmedium darin druckbeaufschlagt, vermindert wird, indem der Druck in der Arbeitsleitung 19 durch Reduzieren des Öffnungsquerschnitts oder Schließen des besagten Ventils vermindert wird, und bevorzugt zusätzlich die Druckluft aus dem Arbeitsmediumvorratsbehälter 7 über eine Entlüftungsleitung 20 in die Umgebung entweichen kann, kann Arbeitsmedium aus dem externen Kühlkreislauf durch den bis unterhalb des Flüssigkeitsspiegels hineinreichenden Kanal zurück in den Arbeitsmediumvorratsbehälter 7 strömen. Das in den Arbeitsmediumvorratsbehälter 7 strömende Arbeitsmedium wird somit von im externen Kühlkreislauf zirkulierendem Anteil des Arbeitsmediums getrennt.

Wie in Figur 1 weiter gezeigt, mündet im Bereich des Auslasses 6 des Retarders 1 beziehungsweise des Arbeitsraumes 4 ein erstes Ende einer dritten Verbindungsleitung 17, wohingegen deren zweites Ende in der zweiten Verbindungsleitung 16, hier in Strömungsrichtung des Arbeitsmediums gesehen, hinter dem Rückschlagventil beziehungsweise vor dem Wärmetauscher 11 mündet. Mit dem im Arbeitsraum 4 mündenden Ende der dritten Verbindungsleitung 17 kann ein Schöpfrohr 12 verbunden sein, welches von radial außen in den Bereich des Rotors 2 beziehungsweise Stators 3 in den Arbeitsraum 4 hineinreicht, um Arbeitsmedium aus diesem nach Art einer Staudruckpumpe abzuführen.

Wie man der Figur 1 weiter entnehmen kann, mündet im vorliegenden Fall das Ende der dritten Verbindungsleitung 17 an einer anderen Stelle im Auslass 6 als das der ersten Verbindungsleitung 15. Selbstverständlich könnte für jede der beiden Verbindungsleitungen 15, 17 auch ein gemeinsamer Auslass im Retarder 1 vorgesehen sein. Betrachtet man die erste Verbindungsleitung 15 als Hauptzweig des externen Kühlkreislaufs, so stellt die dritte Verbindungsleitung 17 vorliegend einen Nebenzweig beziehungsweise parallelen Zweig desselben dar. Dies könnte auch anders sein.

Stator 3 ist hier Teil eines den Retarder 1 umgebenden Gehäuses und steht fest, wohingegen der Rotor 2 mittelbar über eine Rotorwelle 21 in Umlauf versetzt wird. Die Rotorwelle 21 wird im vorliegenden Falle von einer Hohlwelle 22 umschlossen. Auf der Hohlwelle 22 sitzt der Rotor 2 drehfest und umläuft zusammen mit dieser. Die Hohlwelle 22 trägt auf wenigstens einem Abschnitt ihres Innendurchmessers ein Gewinde, wie Steilgewinde und ist auf der Rotorwelle 21 axial verschieblich gelagert. Letztere weist ein komplementäres Außengewinde auf, sodass bei einer Befüllung des Arbeitsraumes 4 mit Arbeitsmedium beim Übergang zum Bremsbetrieb infolge einer Drehbewegung der Rotorwelle 21 die Hohlwelle 22 samt Rotor 2 zunächst relativ auf der Rotorwelle 21 entlang deren Längsachse entgegen einer als Rückstellkraft wirkenden Federkraft einer Feder verschoben wird, um dann von der Rotorwelle 21 mitgenommen zu werden. Die Feder dient dazu, den Rotor 2 wieder selbsttätig, insbesondere beim Entleeren des Arbeitsraumes 4 vom Stator 3 abzufahren.

Durch das Abfahren des Rotors 2 vom Stator 3 kann die Verlustleistung des hydrodynamischen Retarders 1 während des Nicht-Bremsbetriebs minimiert werden. Diese Stellung ist in Figur 1 gezeigt. Das Abfahren erfolgt ausschließlich im Nicht-Bremsbetrieb, wohingegen der Rotor 2 im Bremsbetrieb wieder dicht an den Stator 3 herangefahren wird. Die hier dargestellte Axialverschiebung des Rotors 2 gegenüber dem Stator 3 ist für die Erfindung jedoch nicht zwingend erforderlich.

Zum Minimieren der Leerlaufverluste ist eine Leerlaufpumpe 9 vorgesehen, mittels welcher im Nicht-Bremsbetrieb Arbeitsmedium in den Arbeitsraum 4 gefördert werden kann. Die Leerlaufpumpe 9 umfasst dabei ein Laufrad 9.1, das im einfachsten Fall als Scheibe ausgeführt ist und einen Eintrittsbereich 9.2 zum Zuführen von Arbeitsmedium sowie einen Austrittsbereich 9.3 zum Abführen von Arbeitsmedium aufweist. Beispielsweise kann der Eintrittsbereich 9.2 (Saugseite) über eine zusätzliche, zur zweiten Verbindungsleitung 16 parallel geschaltete Verbindungsleitung 23 mit dem Arbeitsmediumvorratsbehälter 7 strömungsleitend verbunden sein, wobei diese zur Vermeidung einer Ansaugung von Luft unterhalb des Flüssigkeitsspeigels des Arbeitsmediums im Arbeitsmediumvorratsbehälter 7 mündet. Alternativ könnte die Verbindungsleitung 23 in der Verbindungsleitung 16, vor oder hinter der dort angeordneten Drossel münden.

Ist das Laufrad 9.1 als Scheibe ausgeführt, so kann die Zuführung des Arbeitsmediums zum Eintrittsbereich 9.2 zentrisch zum Laufrad 9.1 und hier koaxial zur Rotorwelle 21 erfolgen.

Der Austrittsbereich 9.3, auch als Druckseite der Leerlaufpumpe 9 bezeichnet, ist hier im Bereich des Einlasses 5, radial außen am Laufrad 9.1 angeordnet. Der Austrittsbereich 9.3 mündet hier somit unmittelbar, das heißt ohne Zwischenschaltung weiterer die Arbeitsmediumströmung beeinflussender Elemente wie Düsen, Ventile oder Drosseln im Bereich des Einlasses 5.

Im Nicht-Bremsbetrieb des Retarders 1 wird somit ständig aufgrund des zusammen mit der Rotorwelle 21 umlaufenden Laufrads 9.1 Arbeitsmedium über die Verbindungsleitung 23 aus dem Arbeitsmediumvorratsbehälter 7 in den Arbeitsraum 4 gefördert, wobei in diesem Fall der dem Arbeitsraum 4 von der Leerlaufpumpe 9 zugeführte Arbeitsmediumvolumenstrom stets abhängig von der aktuellen Rotordrehzahl ist. Hierdurch wird sichergestellt, dass während des gesamten Nicht-Bremsbetriebs die eingestellte und im Arbeitsraum verbleibende Restmenge unabhängig von der Pumpwirkung und damit der Drehzahl des (Gegenlauf-)Rotors stets konstant bleibt.

Es ist nicht schädlich, wenn die Leerlaufpumpe 9 aufgrund der hier eingesetzten Drossel festen Strömungsquerschnitts ständig geöffnet ist und damit auch im Bremsbetrieb Arbeitsmedium in den Arbeitsraum 4 fördert, da der von dieser geförderte Arbeitsmediumvolumenstrom aufgrund der Dimensionierung der Leerlaufpumpe 9 lediglich einen Bruchteil des im Bremsbetrieb dem Arbeitsraum 4 zugeführten Volumenstroms entspricht. Infolgedessen ist die Leerlaufpumpe 9 gerade deshalb nicht zur alleinigen Befüllung des Arbeitsraums 4 mit Arbeitsmedium zur Einstellung eines Bremsmomentes im Bremsbetrieb des Retarders 1 geeignet. Wenn gewünscht, können unabhängig von der in Figur dargestellten Ausführungsform auch Maßnahmen getroffen werden, um eine Förderung von Arbeitsmedium mit der Leerlaufpumpe 9 in den Arbeitsraum 4 im Bremsbetrieb zu verhindern. Eine solche Maßnahme wäre beispielsweise ein betätigbares Ventil (nicht gezeigt), welches in der Verbindungsleitung 23 angeordnet sein könnte. Im Bremsbetrieb würde es dann den Strömungsquerschnitt für Arbeitsmedium durch die Verbindungsleitung 23 vollständig absperren, wohingegen es diesen im Nicht-Bremsbetrieb vollständig freigeben würde. Auch Zwischenstellungen des Ventils, in welcher es den Strömungsquerschnitt vollständigen freigibt oder versperrt, wären denkbar. Alternativ oder zusätzlich könnte auch die in der Verbindungsleitung 23 angeordnete Drossel nicht als feste, sondern als verstellbare Drossel ausgeführt sein, die analog zu dem beschrieben Ventil arbeiten würde. Drossel beziehungsweise Ventil könnten dann über eine entsprechende Steuerleitung (nicht dargestellt) von dem Steuerdruck des Druckmediums des Druckbeaufschlagungssystems 8 automatisch bei Aktivieren des Bremsbetriebs betätigt werden, sodass diese selbsttätig schließen würden, und beim Übergang zum Nicht-Bremsbetrieb, bei dem der Steuerdruck zurückgenommen wird, wieder selbsttätig öffnen.

Um die mittels der Leerlaufpumpe 9 im Nicht-Bremsbetrieb geförderte Arbeitsmediummenge exakt einzustellen, kann zusätzlich in der Entlüftungsleitung 20 ein Entlüftungsventil 14 angeordnet sein, welches einen atmosphärischen Druck im Arbeitsmediumvorratsbehälter 7 einstellt.

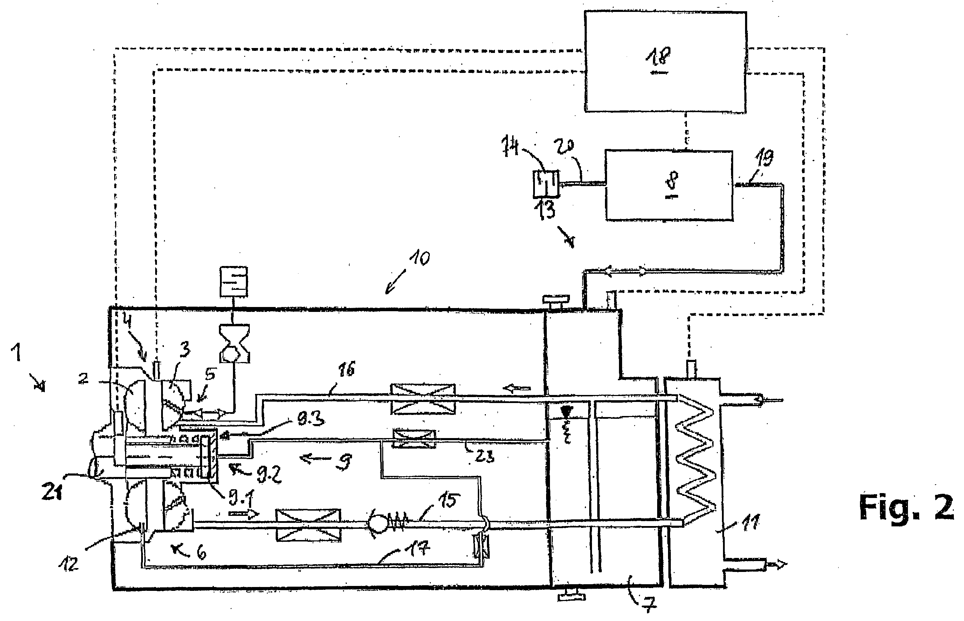

Figur 2 zeigt eine weitere Ausführungsform des hydrodynamischen Retarders. Dabei sind sich entsprechende Elemente mit entsprechenden Bezugszeichen versehen.

Im Gegensatz zur Figur 1 mündet die Verbindungsleitung 17 nicht stromauf des Rückschlagventils in der Leitung 15, sondern stromab der Drossel in der Verbindungsleitung 23. Dadurch, dass das Schöpfrohr 12 über die Verbindungsleitungen 17 und 23 mittelbar mit dem Eintrittsbereich 9.2 der Leerlaufpumpe 9 verbunden ist, wird die Förderwirkung des aus dem Arbeitsraum 3 über das Schöpfrohr 12 abgegriffenen Arbeitsmediums vergrößert. Wie dargestellt, kann in der Verbindungsleitung 17 vor der Mündung in die Verbindungsleitung 23 eine Drossel angeordnet sein.

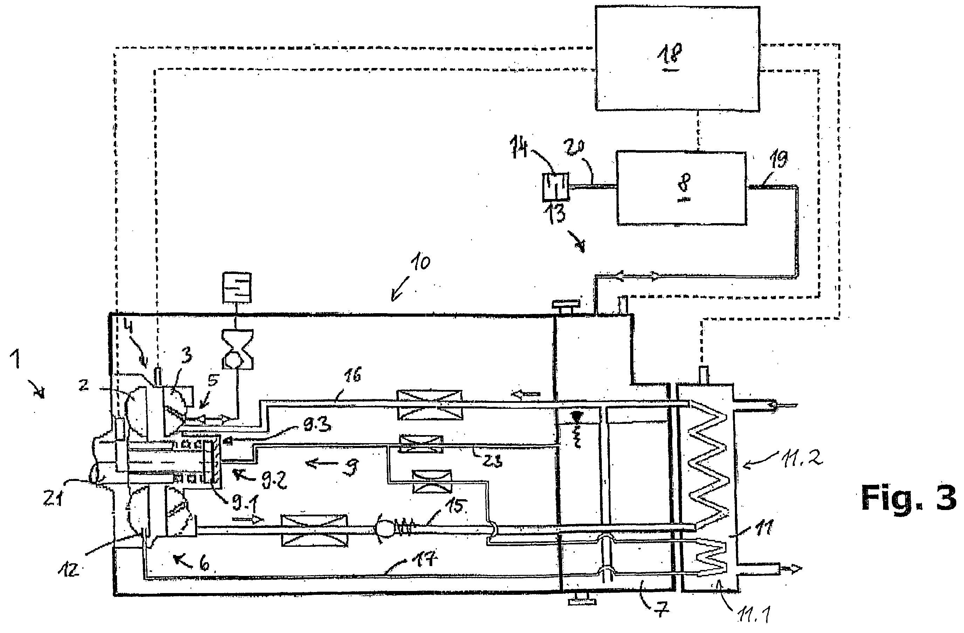

Figur 3 zeigt eine dritte Ausführungsform des hydrodynamischen Retarders. Auch hier sind sich entsprechende Elemente mit entsprechenden Bezugszeichen versehen. Die Ausführungsform gemäß Figur 3 entspricht im Wesentlichen der der Figur 2, jedoch ist die Verbindungsleitung 17 stromauf der darin angeordneten Blende mit dem Wärmetauscher 11 verbunden. Im vorliegenden Fall umfasst der Wärmetauscher zwei Kühlkreise 11.1, 11.2. Kühlkreis 11.1 dient zum Kühlen des über das Schöpfrohr 12 abgegriffenen Arbeitsmediums. Kühlkreis 11.2 dient hingegen zum Kühlen des über den Auslass 6 aus dem Arbeitsraum 3 abgeführten Arbeitsmediums. Dabei können beide Kühlkreise 11.1, 11.2 fluidisch voneinander getrennt sein. Dies ist jedoch nicht zwingend erforderlich.

### Bezugszeichenliste

- 1: hydrodynamischer Retarder
- 2: Rotor
- 3: Stator
- 4: Arbeitsraum
- 5: Einlass
- 6: Auslass
- 7: Arbeitsmediumvorratsbehälter
- 8: Druckbeaufschlagungssystem
- 9: Leerlaufpumpe
- 9.1: Laufrad
- 9.2: Eintrittsbereich
- 9.3: Austrittsbereich
- 10: Kühlkreislauf
- 11: Wärmetauscher
- 11.1: Kühlkreis
- 11.2: Kühlkreis
- 12: Schöpfrohr
- 13: Druckmediumauslass
- 14: Entlüftungsventil
- 15: Verbindungsleitung
- 16: Verbindungsleitung
- 17: Verbindungsleitung
- 18: Steuervorrichtung
- 19: Arbeitsleitung
- 20: Entlüftungsleitung
- 21: Rotorwelle
- 22: Hohlwelle
- 23: Verbindungsleitung

## Patentansprüche

1. Verfahren zum Steuern der Leistungsübertragung eines hydrodynamischen Retarders (1), umfassend einen umlaufenden beschaufelten Rotor (2) und einen beschaufelten Stator (3) oder einen entgegen dem Drehsinn des Rotors (2) umlaufenen beschaufelten Gegenlaufrotors, die miteinander einen über einen Einlass (5) mit Arbeitsmedium befüllbaren und über einen Auslass (6) davon entleerbaren Arbeitsraum (4) ausbilden; wobei
1.1 der Arbeitsraum (4) in einem Bremsbetrieb mit Arbeitsmedium befüllt wird, und ein Bremsmoment mit dem hydrodynamischen Retarder (1) erzeugt wird und in einem Nicht-Bremsbetrieb der Arbeitsraum (4) bis auf eine bestimmte Restmenge von Arbeitsmedium entleert wird und mit dem hydrodynamischen Retarder (1) im Wesentlichen kein Bremsmoment erzeugt wird;
**gekennzeichnet durch** den folgenden Schritt:
1.2 im Nicht-Bremsbetrieb wird mit einer Leerlaufpumpe (9) Arbeitsmedium aus einem Arbeitsmediumvorrat, der außerhalb des Arbeitsraumes (4) in einem Arbeitsmediumvorratsbehälter (7) vorgesehen ist, Arbeitsmedium in den Arbeitsraum (4) des hydrodynamischen Retarders (1) zur Einstellung der Restmenge hineingefördert.

2. Verfahren gemäß Anspruch 1, **dadurch gekennzeichnet, dass** im Bremsbetrieb die im Arbeitsraum (4) enthaltene Arbeitsmediummenge durch mehr oder minder starkes Beaufschlagen des Arbeitsmediumvorrats in dem Arbeitsmediumvorratsbehälter (7) mit einem Steuerdruck variiert wird, wobei in Abhängigkeit des Steuerdrucks mehr oder weniger Arbeitsmedium aus dem Arbeitsmediumvorrat in den Arbeitsraum (4) verdrängt wird, wobei als Arbeitsmedium insbesondere Öl verwendet wird.

3. Verfahren gemäß einem der Ansprüche 1 oder 2, **dadurch gekennzeichnet, dass** eine Leerlaufpumpe (9) verwendet wird, deren Außendurchmesser zumindest eines Laufrades (9.1) derselben kleiner ist als der Außendurchmesser des Arbeitsraums (4) oder kleiner ist als der Durchmesser, auf dem die Mündung des Einlasses (5) im Arbeitsraum (4) positioniert ist, oder kleiner ist als der Innendurchmesser des Arbeitsraums (4).

4. Verfahren gemäß einem der Ansprüche 1 bis 3, **dadurch gekennzeichnet, dass** das Arbeitsmedium im Nicht-Bremsbetrieb mit der Leerlaufpumpe (9) unmittelbar aus dem Arbeitsmediumvorratsbehälter (7) und außerhalb von Dichtelementen, mittels welchen der Rotor (2) gegenüber einem Gehäuse des hydrodynamischen Retarders (1) abgedichtet ist, in den Arbeitsraum (4) des hydrodynamischen Retarders (1) zur Einstellung der Restmenge hineingefördert wird.

5. Verfahren gemäß einem der Ansprüche 1 bis 4, **dadurch gekennzeichnet, dass** mit der Leerlaufpumpe (9) ein zur Drehzahl des Rotors (2) oder Gegenlaufrotors proportionaler Arbeitsmediummassenstrom oder Arbeitsmediumvolumenstrom in den Arbeitsraum (4) gefördert wird, wobei die Leerlaufpumpe (9) insbesondere durch den Rotor (2) oder den Gegenlaufrotor (3) direkt oder indirekt angetrieben wird.

6. Verfahren gemäß einem der Ansprüche 1 bis 5, **dadurch gekennzeichnet, dass** der Arbeitsmediumvorratsbehälter (7) mittels eines Entlüftungsventils (14) im Nicht-Bremsbetrieb bis auf Umgebungsdruck entlüftet wird.

7. Verfahren gemäß einem der Ansprüche 1 bis 6, **dadurch gekennzeichnet, dass** die Leerlaufpumpe (9) ein Laufrad (9.1) in Form einer Scheibe mit einem radial inneren Eintrittsbereich (9.2) für Arbeitsmedium und einem radial äußeren Austrittsbereich (9.3) für Arbeitsmedium aufweist, wobei das Arbeitsmedium durch Antreiben des Laufrads (9.1) und durch Wirkung der Zentrifugalkraft vom Eintrittsbereich (9.1) zum Austrittsbereich (9.3) und aus diesem heraus in den Arbeitsraum (4) gefördert wird.

8. Verfahren gemäß einem der Ansprüche 1 bis 7, **dadurch gekennzeichnet, dass** das Arbeitsmedium aus dem Arbeitsmediumvorrat unmittelbar zum Eintrittsbereich (9.2) geleitet wird und dadurch Arbeitsmedium aus dem Arbeitsmediumvorrat in den Arbeitsraum (4) gefördert wird.

9. Verfahren gemäß einem der Ansprüche 1 bis 8, **dadurch gekennzeichnet, dass** die Leerlaufpumpe (9) ausschließlich zum Fördern von Arbeitsmedium in den Arbeitsraum (4) des hydrodynamischen Retarders (1) zur Einstellung der Restmenge im Nicht-Bremsbetrieb verwendet wird.

10. Hydrodynamischer Retarder (1),
10.1 mit einem umlaufenden beschaufelten Rotor (2) und einem beschaufelten Stator (3) oder einem entgegen dem Drehsinn des Rotors (2) umlaufenden beschaufelten Gegenlaufrotor, die miteinander einen im Bremsbetrieb über einen Einlass (5) mit Arbeitsmedium befüllbaren und über einen Auslass (6) davon entleerbaren Arbeitsraum (4) ausbilden;
10.2 und mit einer Leerlaufpumpe (9), **dadurch gekennzeichnet, dass** die Leerlaufpumpe dazu ausgebildet ist, im Nicht-Bremsbetrieb Arbeitsmedium aus einem Arbeitsmediumvorrat, der außerhalb des Arbeitsraumes (4) in einem Arbeitsmediumvorratsbehälter (7) vorgesehen ist, in den Arbeitsraum (4) hineinzufördern.

11. Hydrodynamischer Retarder (1) gemäß Anspruch 10, **dadurch gekennzeichnet, dass** dem hydrodynamischen Retarder (1) ein externer Kühlkreislauf (10) zum Kühlen des Arbeitsmedium zugeordnet ist, umfassend den Arbeitsmediumvorratsbehälter (7) zur Aufnahme von momentan nicht im Arbeitsraum (4) befindlichen Arbeitsmedium in einem Arbeitsmediumvorrat, wobei der externe Kühlkreislauf (10) über den Einlass (5) und den Auslass (6) am Arbeitsraum (4) angeschlossen ist.

12. Hydrodynamischer Retarder (1) gemäß einem der Ansprüche 10 oder 11, **dadurch gekennzeichnet, dass** die Leerlaufpumpe (9) ein Laufrad (9.1) insbesondere in Form einer Scheibe aufweist, welche/s einen radial inneren Eintrittsbereich (9.2) und einen radial äußeren Austrittsbereich (9.3) für Arbeitsmedium aufweist, wobei der Eintrittsbereich (9.2) über den Einlass (5) oder einen zusätzlichen Einlass, insbesondere in Form Füllschlitzen mit dem Arbeitsraum (4) arbeitsmediumleitend verbunden ist.

13. Hydrodynamischer Retarder gemäß Anspruch 12, **dadurch gekennzeichnet, dass** das Laufrad (9.1) in einer Triebverbindung mit dem Rotor (2) oder Gegenlaufrotor steht oder von diesem getragen wird.

14. Hydrodynamischer Retarder gemäß einem der Ansprüche 12 oder 13, **dadurch gekennzeichnet, dass** der Eintrittsbereich (9.2) arbeitsmediumleitend mit dem Arbeitsmediumvorrat im Arbeitsmediumvorratsbehälter (7) verbunden ist, insbesondere parallel zu der Verbindung des Arbeitsmediumvorratsbehälters (7) über den externen Kühlkreislauf (10) mit dem Einlass (5).

15. Hydrodynamischer Retarder gemäß einem der Ansprüche 10 bis 14, **dadurch gekennzeichnet, dass** der Arbeitsmediumvorratsbehälter (7) ein Druckbeaufschlagungssystem (8) zum Aufbringen eines Steuerdrucks mittels eines Druckmediums auf den Arbeitsmediumvorrat, um mehr oder minder viel Arbeitsmedium in den Arbeitsraum (4) zu verdrängen, aufweist, und der Arbeitsmediumvorratsbehälter (7) einen Druckmediumauslass (13) mit einem Entlüftungsventil (14) aufweist.

16. Hydrodynamischer Retarder gemäß einem der Ansprüche 10 bis 15, **dadurch gekennzeichnet, dass** zusätzlich zu dem Auslass (6), über welchen der externe Kühlkreislauf (10) am Arbeitsraum (4) angeschlossen ist, eine Ableitung für Arbeitsmedium im Nicht-Bremsbetrieb vorgesehen ist, welche ein in Radialrichtung zu dem Arbeitsraum (4) verlaufendes und/oder in diesen hineinragendes Schöpfrohr (12) aufweist.

17. Hydrodynamischer Retarder gemäß Anspruch 16, **dadurch gekennzeichnet, dass** das Schöpfrohr (12) unmittelbar mit dem Eintrittsbereich (9.2) oder mittelbar über wenigstens eine Verbindungsleitung (17, 23), die in den Eintrittsbereich (9.2) mündet, strömungsleitend verbunden ist; wobei in der wenigstens einen Verbindungsleitung (17, 23) ein Wärmetauscher (11) zum Kühlen des über das Schöpfrohr (12) abgegriffenen Arbeitsmediums angeordnet ist.

18. Hydrodynamischer Retarder gemäß Anspruch 17, **dadurch gekennzeichnet, dass** der Wärmetauscher (11) einen ersten Kühlkreis (11.1) zum Kühlen des über das Schöpfrohr (12) abgegriffenen Arbeitsmediums und einen zweiten Kühlkreis (11.2) zum Kühlen des über den Auslass (6) abgeführten Arbeitsmediums aufweist.

19. Hydrodynamischer Retarder gemäß einem der Ansprüche 10 bis 18, **dadurch gekennzeichnet**, der Außendurchmesser der Leerlaufpumpe (9), zumindest eines Laufrades (9.1) derselben kleiner ist als der Außendurchmesser des Arbeitsraums (4) oder kleiner ist als der Durchmesser, auf dem die Mündung des Einlasses (5) im Arbeitsraum (4) positioniert ist, oder kleiner ist als der Innendurchmesser des Arbeitsraums (4).

## Claims

1. A method for controlling the power transmission of a hydrodynamic retarder (1), comprising a rotating bladed rotor (2) and a bladed stator (3) or a bladed counter-rotor rotating against the direction of rotation of the rotor (2), which form together a working chamber (4) which selectively can be filled with a working medium via an inlet (5) and can be drained via an outlet (6); whereas
1.1 the working chamber (4) is filled with a working medium, in braking mode, and a braking torque is generated with the hydrodynamic retarder (1) and in non-braking mode, the working chamber (4) is emptied of working medium down to a certain residual amount and substantially no braking torque is generated with the hydrodynamic retarder (1);
**characterised by** the following step:
1.2 in non-braking mode, working medium is injected into the working chamber (4) of the hydrodynamic retarder (1) for adjusting the residual amount, said working medium being extracted from a stock of working medium, which is provided outside the working chamber (4) in a working medium storage tank (7), using an idle pump (9).

2. A method according to claim 1, **characterised in that** in braking mode the amount of working medium contained in the working chamber (4) is varied by more or less strongly subjecting the stock of working medium in the working medium storage tank (7) to a control pressure, whereas according to the control pressure more or less working medium is forced into the working chamber (4) from the stock of working medium, whereas oil in particular is used as a working medium.

3. A method according to any of the claims 1 or 2,**characterised in that** an idle pump (9) is used, whose outer diameter of at least one impeller wheel (9.1) of the same is smaller than the outer diameter of the working chamber (4) or is smaller than the diameter, on which the orifice of the inlet (5) is positioned in the working chamber (4), or is smaller than the inner diameter of the working chamber (4).

4. A method according to one of the claims 1 to 3, **characterised in that** the working medium in non-braking mode is forced into the working chamber (4) of the hydrodynamic retarder (1) for adjusting the residual amount, using the idle pump (9) directly from the working medium storage tank (7) and outside sealing elements, by means of which the rotor (2) is sealed hermetically with respect to a casing of the hydrodynamic retarder (1).

5. A method according to one of the claims 1 to 4, **characterised in that** a mass flow of working medium or a volume flow of working medium, which is proportional to the rotational speed of the rotor (2) or of the counter-rotor, is injected by the idle pump (9), whereas the idle pump (9) is driven directly or indirectly in particular by the rotor (2) or the counter-rotor (3).

6. A method according to one of the claims 1 to 5, **characterised in that** the working medium storage tank (7), in non-breaking mode, is vented by means of a ventilation unit (14) down to the ambient pressure.

7. A method according to one of the claims 1 to 6, **characterised in that** the idle pump (9) comprises an impeller wheel (9.1) in the form of a disk with a radially internal inlet region (9.2) for working medium and a radially external outlet region (9.3) for working medium, whereas the working medium is conveyed from the inlet region (9.1) to the outlet region (9.3) and from the latter into the working chamber (4) by driving the impeller wheel (9.1) and by the effect of the centrifugal force.

8. A method according to one of the claims 1 to 7, **characterised in that** the working medium is guided from the stock of working medium directly to the inlet region (9.2) and thereby working medium is conveyed from the stock of working medium into the working chamber (4).

9. A method according to one of the claims 1 to 8, **characterised in that** the idle pump (9) is used exclusively for feeding working medium into the working chamber (4) of the hydrodynamic retarder (1) for adjusting the residual amount in non-braking mode.

10. A hydrodynamic retarder (1),
10.1 having a rotating bladed rotor (2) and a bladed stator (3) or a bladed counter-rotor rotating against the direction of rotation of the rotor (2), which in braking mode form together a working chamber (4) which selectively can be filled with a working medium via an inlet (5) and can be drained via an outlet (6);
10.2 and with an idle pump (19), **characterised in that** the idle pump (19) is configured to inject, in non-braking mode, working medium into the working chamber (4) from a stock of working medium, which is provided outside the working chamber (4) in a working medium storage tank (7).

11. A hydrodynamic retarder (1) according to claim 10, **characterised in that** an external cooling circuit (10) is associated with the hydrodynamic retarder (1) for cooling the working medium, comprising the working medium storage tank (7) for absorbing, in a stock of working medium, the working medium which is not situated in the working chamber (4) at that time, whereas the external cooling circuit (10) is connected to the work space (4) via the inlet (5) and the outlet (6).

12. A hydrodynamic retarder (1) according to one of claims 10 or 11, **characterised in that** the idle pump (9) comprises an impeller wheel (9.1) in particular in the form of a disk, which comprises a radially internal inlet region (9.2) and a radially external outlet region (9.3) for working medium, whereas the inlet region (9.2) is connected to the working chamber (4) for conveying the working medium via the inlet (5) or an additional inlet, in particular in the form of filling slots.

13. A hydrodynamic retarder according to claim 12, **characterised in that** the impeller wheel (9.1) is in a driving connection with the rotor (2) or the counter-rotor or is carried by the same.

14. A hydrodynamic retarder according to one of claims 12 or 13, **characterised in that** the inlet region (9.2) is connected for conveying the working medium with the stock of working medium in the working medium storage tank (7), in particular parallel to the connection of the working medium storage tank (7) via the external cooling circuit (10) with the inlet (5).

15. A hydrodynamic retarder according to one of claims 10 to 14, **characterised in that** the working medium storage tank (7) comprises a pressurisation system (8) for applying a control pressure by means of a pressure medium to the stock of working medium, to inject more or less working medium into the working chamber (4), and the working medium storage tank (7) comprises a pressure medium outlet (13) with a ventilation unit (14).

16. A hydrodynamic retarder according to one of claims 10 to 15, **characterised in that** in addition to the outlet (6), via which the external cooling circuit (10) is connected to the working chamber (4), a deviation for working medium is provided in non-braking mode, which comprises in pilot tube (12) extending in radial direction to the working chamber (4) and/or projecting into said chamber.

17. A hydrodynamic retarder according to claim 16, **characterised in that** the pilot tube (12) is connected in a flow-guiding manner directly with the inlet region (9.2) or indirectly via at least one connection pipe (17, 23), which emerges into the inlet region (9.2); whereas in the at least one connection pipe (17, 23) a heat exchanger (11) is arranged for cooling the working medium tapped via the pilot tube (12).

18. A hydrodynamic retarder according to claim 17, **characterised in that** the heat exchanger (11) comprises a first cooling system (11.1) for cooling the working medium tapped via the pilot tube (12) and a second cooling system (11.2) for cooling the working medium discharged via the outlet (6).

19. A hydrodynamic retarder according to one of claims 10 to 18, **characterised in** the outer diameter of the idle pump (9), of at least one impeller wheel (9.1) of the same is smaller than the outer diameter of the working chamber (4) or is smaller than the diameter, on which the orifice of the inlet (5) is positioned in the working chamber (4), or is smaller than the inner diameter of the working chamber (4).

## Revendications

1. Procédé pour contrôler la transmission de puissance d'un retardateur hydrodynamique (1) comprenant un rotor (2) tournant muni de pales et un stator (3) muni de pales ou un rotor contrarotatif muni de pales qui tourne en sens inverse du sens de rotation du rotor (2), qui forment ensemble un espace de travail (4) pouvant être rempli avec un fluide de travail via une entrée (5) et vidé de celui-ci via une sortie (6), dans lequel
1.1 l'espace de travail (4) est rempli de fluide de travail dans un mode de freinage et un moment de freinage est créé avec le retardateur hydrodynamique (1), et dans un mode sans freinage, l'espace de travail (4) est vidé jusqu'à une certaine quantité résiduelle de fluide de travail et le retardateur hydrodynamique (1) ne crée sensiblement aucun moment de freinage ;**caractérisé en ce qu'**il comprend l'étape suivante :
1.2 dans le mode sans freinage, une pompe de marche à vide (9) achemine du fluide de travail d'une réserve de fluide de travail, qui est prévue à l'extérieur de l'espace de travail (4) dans un réservoir de fluide de travail (7), dans l'espace de travail (4) du retardateur hydrodynamique (1) pour ajuster la quantité résiduelle.

2. Procédé selon la revendication 1, **caractérisé en ce que** dans le mode de freinage, la quantité de fluide de travail contenue dans l'espace de travail (4) est modifiée par une exposition plus ou moins forte de la réserve de fluide de travail dans le réservoir de fluide de travail (7) à une pression de commande, une quantité de fluide de travail plus ou moins importante selon la pression de commande étant chassée de la réserve de fluide de travail vers l'espace de travail (4), le fluide de travail utilisé étant en particulier de l'huile.

3. Procédé selon l'une des revendications 1 ou 2, **caractérisé en ce qu'**il utilise une pompe de marche à vide (9) dont au moins une roue (9.1) a un diamètre extérieur plus petit que le diamètre extérieur de l'espace de travail (4) ou plus petit que le diamètre sur lequel l'embouchure de l'entrée (5) est positionnée dans l'espace de travail (4) ou plus petit que le diamètre intérieur de l'espace de travail (4).

4. Procédé selon l'une des revendications 1 à 3, **caractérisé en ce que** dans le mode sans freinage, le fluide de travail est directement acheminé avec la pompe de marche à vide (9) hors du réservoir de fluide de travail (7) et en dehors d'éléments d'étanchéité au moyen desquels le rotor (2) est isolé d'un corps du retardateur hydrodynamique (1) et vers l'espace de travail (4) du retardateur hydrodynamique (1) afin d'ajuster la quantité résiduelle.

5. Procédé selon l'une des revendications 1 à 4, **caractérisé en ce que** la pompe de marche à vide (9) achemine dans l'espace de travail (4) un débit de masse de fluide de travail ou un débit volumique de fluide de travail proportionnel à la vitesse de rotation du rotor (2) ou du rotor contrarotatif, la pompe de marche à vide (9) étant en particulier entraînée directement ou indirectement par le rotor (2) ou le rotor contrarotatif (3).

6. Procédé selon l'une des revendications 1 à 5, **caractérisé en ce que** le réservoir de fluide de travail (7) est dégazé au moyen d'une soupape de dégazage (14) jusqu'à la pression ambiante en mode sans freinage.

7. Procédé selon l'une des revendications 1 à 6, **caractérisé en ce que** la pompe de marche à vide (9) possède une roue (9.1) en forme de disque avec une zone d'entrée (9.2) intérieure dans le sens radial pour le fluide de travail et une zone de sortie (9.3) extérieure dans le sens radial pour le fluide de travail, le fluide de travail étant acheminé par l'entraînement de la roue (9.1) et sous l'action de la force centrifuge de la zone d'entrée (9.1) à la zone de sortie (9.3) et de celle-ci à l'espace de travail (4).

8. Procédé selon l'une des revendications 1 à 7, **caractérisé en ce que** le fluide de travail est acheminé directement de la réserve de fluide de travail à la zone d'entrée (9.2) et du fluide de travail est ainsi acheminé de la réserve de fluide de travail à l'espace de travail (4).

9. Procédé selon l'une des revendications 1 à 8, **caractérisé en ce que** la pompe de marche à vide (9) est utilisée exclusivement pour acheminer du fluide de travail dans l'espace de travail (4) du retardateur hydrodynamique (1) afin d'ajuster la quantité résiduelle dans le mode sans freinage.

10. Retardateur hydrodynamique (1)
10.1 avec un rotor (2) tournant muni de pales et un stator (3) muni de pales ou un rotor contrarotatif muni de pales tournant en sens inverse du sens de rotation du rotor (2), qui forment ensemble un espace de travail (4) qui peut être rempli avec un fluide de travail via une entrée (5) dans un mode de freinage et vidé de celui-ci via une sortie (6) ;
10.2 et avec une pompe de marche à vide (9), **caractérisé en ce que** la pompe de marche à vide est conçue pour acheminer du fluide de travail d'une réserve de fluide de travail, qui est prévue à l'extérieur de l'espace de travail (4) dans un réservoir de fluide de travail (7), dans l'espace de travail (4) dans le mode sans freinage.

11. Retardateur hydrodynamique (1) selon la revendication 10, **caractérisé en ce que** le retardateur hydrodynamique (1) est associé à un circuit de refroidissement externe (10) destiné à refroidir le fluide de travail et comprenant le réservoir de fluide de travail (7) qui reçoit le fluide de travail qui ne se trouve pas dans l'espace de travail (4) à un moment donné dans une réserve de fluide de travail, le circuit de refroidissement externe (10) étant raccordé à l'espace de travail (4) par l'entrée (5) et la sortie (6).

12. Retardateur hydrodynamique (1) selon l'une des revendications 10 ou 11, **caractérisé en ce que** la pompe de marche à vide (9) présente une roue (9.1) en particulier en forme de disque, qui présente une zone d'entrée (9.2) intérieure dans le sens radial et une zone de sortie (9.3) extérieure dans le sens radial pour du fluide de travail, la zone d'entrée (9.2) communiquant avec l'espace de travail (4) de façon à acheminer le fluide de travail via l'entrée (5) ou une entrée supplémentaire, en particulier formée par des fentes de remplissage.

13. Retardateur hydrodynamique selon la revendication 12, **caractérisé en ce que** la roue (9.1) est en liaison motrice avec le rotor (2) ou le rotor contrarotatif ou est portée par celui-ci.

14. Retardateur hydrodynamique selon l'une des revendications 12 ou 13, **caractérisé en ce que** la zone d'entrée (9.2) communique de façon à acheminer le fluide de travail avec la réserve de fluide de travail dans le réservoir de fluide de travail (7), en particulier parallèlement à la communication du réservoir de fluide de travail (7), avec l'entrée (5) via le circuit de refroidissement externe (10).

15. Retardateur hydrodynamique selon l'une des revendications 10 à 14, **caractérisé en ce que** le réservoir de fluide de travail (7) présente un système de pressurisation (8) destiné à appliquer une pression de commande sur la réserve de fluide de travail au moyen d'un fluide sous pression afin de refouler plus ou moins de fluide de travail dans l'espace de travail (4), et le réservoir de fluide de travail (7) présente une sortie de fluide sous pression (13) avec une soupape de dégazage (14).

16. Retardateur hydrodynamique selon l'une des revendications 10 à 15, **caractérisé en ce qu'**outre la sortie (6) par laquelle le circuit de refroidissement externe (10) est raccordé à l'espace de travail (4), il est prévu une dérivation pour du fluide de travail dans le mode sans freinage, qui présente un tuyau de captage (12) orienté dans le sens radial par rapport à l'espace de travail (4) et/ou dépassant dans celui-ci.

17. Retardateur hydrodynamique selon la revendication 16, **caractérisé en ce que** le tuyau de captage (12) communique de façon à conduire l'écoulement avec la zone d'entrée (9.2), directement ou indirectement via au moins une conduite de communication (17,23) qui débouche dans la zone d'entrée (9.2), l'au moins une conduite de communication (17,23) présentant un échangeur de chaleur (11) pour refroidir le fluide de travail capté par le tuyau de captage (12).

18. Retardateur hydrodynamique selon la revendication 17, **caractérisé en ce que** l'échangeur de chaleur (11) présente un premier circuit de refroidissement (11.1) pour refroidir le fluide de travail capté par le tuyau de captage (12) et un deuxième circuit de refroidissement (11.2) pour refroidir le fluide de travail évacué par la sortie (6).

19. Retardateur hydrodynamique selon l'une des revendications 10 à 18, **caractérisé en ce que** le diamètre extérieur de la pompe de marche à vide (9), d'au moins une roue (9.1) de celle-ci est plus petit que le diamètre extérieur de l'espace de travail (4) ou plus petit que le diamètre sur lequel l'embouchure de l'entrée (5) est positionnée dans l'espace de travail (4) ou plus petit que le diamètre intérieur de l'espace de travail (4).
